# EUROPÄISCHE PATENTSCHRIFT

(11) **EP 1 371 532 B1**
(45) Veröffentlichungstag und Bekanntmachung des Hinweises auf die Patenterteilung: **19.04.2006**
(21) Anmeldenummer: 03011780.8
(22) Anmeldetag: 24.05.2003
(51) Int. Cl.: B60S 1/08

(54) **Montagehilfe für das Befestigen von selbstklebenden Bauteilen an Scheiben**
Mounting aid for attaching self-adhesive components to screens
Aide de montage pour l'attache de composants auto-adhésifs sur vitres

(30) Priorität: 13.06.2002 DE 10226302
(43) Veröffentlichungstag der Anmeldung: 17.12.2003
(73) Patentinhaber: Preh GmbH, 97616 Bad Neustadt a.d. Saale (DE)
(72) Erfinder: Erdloff, Dirk, 97724 Burglauer (DE)
(74) Vertreter: Dietrich, Barbara

(56) Entgegenhaltungen:
- EP-A- 0 461 643
- EP-A- 1 179 576
- DE-A- 10 016 088
- DE-A- 19 727 600
- US-A- 5 246 519

## Beschreibung

Die Erfindung betrifft eine Montagehilfe für das Befestigen von selbstklebenden Bauteilen an Scheiben oder dergleichen.

Ein derartiges selbstklebendes Bauteil ist u.a. aus der DE 198 46 969 A1 bekannt. Das hier beschriebene Bauteil, ein Regensensor in einem Sensorgehäuse, ist mittels einer transparenten Klebefolie auf einer Windschutzscheibe eines Kraftfahrzeugs angebracht. Bekanntlich erfolgt das Aufsetzen des Bauteils auf die Scheibe direkt per Hand. Das hat den Nachteil, dass neben einer wahrscheinlichen Ungenauigkeit ein Verschieben des einmal geklebten Bauteiles in eine bessere oder andere Position nicht mehr möglich ist.

Dokument DE 100 16 088 A1 beschreibt eine Montagehilfe nach dem Oberbegriff des Anspruchs 1.

Hier greift die Erfindung die Aufgabe auf, eine Möglichkeit aufzuzeigen, eine exakte Positionierung des Bauteils zu erreichen.

Gelöst wird die Aufgabe durch die Merkmale des Anspruchs 1.

Der Erfindung liegt die Idee zugrunde, eine Montagehilfe zu schaffen, in die ein derartiges Bauteil einsetzbar ist und mit dem das Bauteil exakt auf bzw. gegenüber einer zu beklebenden Fläche positioniert werden kann. Die Montagehilfe weist dazu einen schablonenartigen Aufbau auf und besitzt einen, dem Bauteil angepaßten Durchbruch, wodurch das Bauteil selbst innerhalb dieses Durchbruchs gehalten und damit in der Schablone exakt fixiert wird. Die Montageschablone selbst weist eine Außenkontur auf, durch die ihrerseits eine exakte Fixierung für das Befestigen des Bauteils auf der zu beklebenden Fläche realisiert wird. Erst nach eindeutiger Positionierung wird dann das Bauteil, welches bis dahin mit der Schablone über der Fläche frei verschoben werden kann, aus der Schablone gegen die Klebefläche gedrückt.

Durch die Montageschablone wird eine einfache Platzierung und Montage insbesondere eines selbstklebenden Bauteils aufgezeigt.

Die Montagehilfe ist zur Befestigung eines Regen-, Feuchtigkeits- und/oder Beschlagsensors an einer Scheibe vorgesehen, kann aber auch für runde, ekkige oder anders geformte Bauteile verwendet werden.
Anhand eines Ausführungsbeispiels mit Zeichnung soll die Erfindung näher erläutert werden.

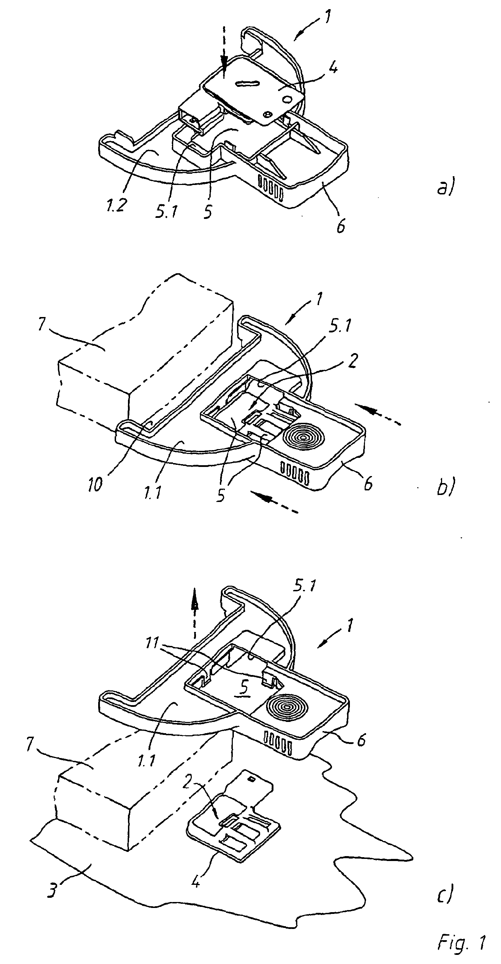

Es zeigt
- Fig. 1a: eine Montageschablone sowie das Einsetzen eines Bauteils in die Montageschablone,
- Fig. 1b: eine Darstellung der Positionierung des Bauteils auf einer Fläche,
- Fig. 1c: das positionierte Bauteil mit abgesetzter Montageschablone.

In den Fig. 1a bis 1c sind eine Montagehilfe 1 in Form einer Montageschablone für die Befestigung eines Bauteils 2 auf einer Fläche 3 (siehe Fig. 1b, 1c), beispielsweise einer Frontscheibe eines Kfz, dargestellt.
Fig. 1a zeigt die Montageschablone 1 in einer Unteransicht, d.h. es ist die untere Seite 1.2 der Montageschablone 1 mit dem eingesetzten Bauteil 2 mit selbstklebender Fläche 4 mit Schutzfolie erkennbar. Die Montageschablone 2 weist zur Aufnahme des Bauteils 2 einen Durchbruch 5 auf, dessen Innenkontur der Außenkontur des Bauteils 2 entspricht. Das Bauteil 2 wird vorzugsweise selbsttragend gehalten. Es kann aber auch innerhalb der Durchbruchs 5 eine Auflagefläche 5.1 vorgesehen werden, auf der eine kleine Fläche des Bauteils 2 aufliegen kann. Durch diese Maßnahme wird erreicht, dass das Bauteil 2 in einem definierten Abstand zur unteren Seite 1.2 innerhalb des Durchbruchs 5 gehalten wird, z. B. Schnapphaken 11 verhindem das Herausfallen. Ein Hals 6 an der Montageschablone 1 dient zur besseren Handhabung.
Fig. 1b zeigt die Positionierung der Montageschablone 1 in einer Draufsicht mit Bauteil 2 auf die Oberfläche 3. Das Bauteil 2 ist durch den Durchbruch 5 von der oberen Seite 1.1 erkennbar und händelbar. Vorteilhaft ist, dass das Bauteil 2 mit der klebenden Fläche 4 mit der unteren Seite der Montageschablone 1 nicht abschließt, sondern ein geringes Spiel aufweist. Dadurch können die Montageschablone 1 sowie das Bauteil 2 über die Fläche 3 zum Positionieren verschoben werden, wobei das Bauteil 2 über der Fläche 3 schwebt.
Ist die gewünschte Position erreicht, wird das Bauteil 2 beispielsweise mittels Fingerdruck gegen die Fläche 3 soweit aus der Montageschablone 1 gedrückt, dass diese danach problemlos vom Bauteil 2 abgehoben werden kann, das Bauteil 2 jedoch positioniert bleibt (Fig. 1c).

In einer besonderen Ausführung, die bereits in den Fig. erkennbar ist, besitzt die Montageschablone 1 eine Gabelung 10. Diese dient zur besseren Positionierung bzw. zur Orientierung des Bauteils 2 gegenüber einem bereits vorhandenen Bauteil 7. Im vorliegenden Beispiel bildet diese Gabelung 10 eine rechteckige Körperform des Bauteils 7 teilweise nach. Bei einer runden oder dreieckigen Außenkontur kann die Gabelung 10 dieser angepaßt sein.

Es versteht sich, dass die Montageschablone 1 weitere Durchbrüche aufweisen kann, wenn dies erwünscht wird.

Die Montagehilfe 1 besteht vorzugsweise aus einem Kunststoffteil, welches beispielsweise mittels Spritzgießen hergestellt werden kann. Es sind aber auch andere Materialien möglich.

## Patentansprüche

1. Montagehilfe für das Befestigen eines Bauteils (2) mit selbstklebender Fläche (4) auf einer zu beklebenden Fläche (3), aufweisend
- einen schablonenartigen Aufbau, wobei
- ein Durchbruch (5) in der Schablone (1) zur Aufnahme des aufzuklebenden Bauteils (2) dient und
- der Durchbruch (5) Teile der Außenkontur des Bauteils (2) nachbildet, wobei
- das aufzuklebende Bauteil (2) mit der selbstklebenden Fläche (4) nicht mit der Unterseite (12) der Schablone (1) abschließt,
**dadurch gekennzeichnet, dass**
- das aufzuklebende Bauteil (2) ein Regen-, Feuchtigkeits- und/oder Beschlagsensor mit einer darauf befestigten selbstklebenden Fläche (4) ist, der an einer Scheibe zu befestigen ist, und
- dass der Durchbruch Teile der Außenkontur des aufzuklebenden Bauteils (2) soweit nachbildet, dass das aufzuklebende Bauteil (2) im Durchbruch (5) gehalten oder durch Schnapphaken (11) fixiert wird.

2. Montagehilfe nach Anspruch 1, **dadurch gekennzeichnet, dass** im Durchbruch (5) Schnapphaken (11) oder ähnliche Mittel zur Fixierung des aufzuklebenden Bauteils (2) im Durchbruch (5) vorgesehen sind.

3. Montagehilfe nach Anspruch 1 oder 2, **dadurch gekennzeichnet, dass** ein Hals (6) zur besseren Handhabung oberhalb des Durchbruchs (5) vorgesehen ist.

4. Montagehilfe nach einem der Ansprüche 1 bis 3, **dadurch gekennzeichnet, dass** eine Gabelung (10) vorgesehen ist, die eine Körperform eines weiteren Bauteils (7) oder Ortes angepaßt ist, an dem die Montagehilfe (1) sich bei der Positionierung orientiert.

5. Montagehilfe nach einem der Ansprüche, **dadurch gekennzeichnet, dass** innerhalb des Durchbruchs (5) eine Auflagefläche (5.1) für einen Teil des aufzuklebenden Bauteils (2) vorgesehen ist.

## Claims

1. Assembly aid for attaching a component (2) with self-adhesive surface (4) to a surface (3) to be lined, having
- a stencil-like structure, wherein
- an aperture (5) in the stencil (1) serves to receive the stick-on component (2), and
- the aperture (5) imitates parts of the outer contour of the component (2), wherein
- the stick-on component (2) with the self-adhesive surface (4) does not terminate with the underside (12) of the stencil (1),
**characterized in that**
- the stick-on component (2) is a rain, moisture and/or condensation sensor having an attached self-adhesive surface (4) for attachment to a screen, and
- **in that** the aperture imitates parts of the outer contour of the stick-on component (2) in as much as the stick-on component (2) is held in the aperture (5) or is fixed by snap hooks (11).

2. Assembly aid according to Claim 1, **characterized in that** in the aperture (5) there are provided snap hooks (11) or similar means for fixing the stick-on component (2) in the aperture (5).

3. Assembly aid according to Claim 1 or 2, **characterized in that** a neck (6) for better handling is provided above the aperture (5).

4. Assembly aid according to one of Claims 1 to 3, **characterized in that** a fork (10) is provided, which is matched to a body shape of a further component (7) or place by which the assembly aid (1) orientates itself in the positioning.

5. Assembly aid according to one of the claims, **characterized in that**, within the aperture (5), a bearing surface (5.1) for a part of the stick-on component (2) is provided.

## Revendications

1. Auxiliaire de montage, pour la fixation d'un élément (2) à surface autoadhésive (4) sur une surface de collage (3), comportant
- une structure du type d'un gabarit,
- un jour (5) dans le gabarit (1) servant à loger l'élément à coller (2) et
- le jour (5) imitant des parties du contour extérieur de l'élément à coller (2),
- l'élément à coller (2) à surface autoadhésive (4) ne se terminant pas par la face inférieure (12) du gabarit (1),
**caractérisé en ce que**
- l'élément à coller (2) est un capteur de pluie, d'humidité et/ou de buée, avec une surface autoadhésive (4) fixée dessus, qui doit être fixé sur une vitre et
- **en ce que** le jour imite des parties du contour extérieur de l'élément à coller (2) dans une mesure telle que l'élément à coller (2) est maintenu dans le jour (5) ou fixé par des crochets à encliqueter (11).

2. Auxiliaire de montage selon la revendication 1, **caractérisé en ce que** dans le jour (5) des crochets à encliqueter (11) ou des moyens analogues pour fixer l'élément à coller (2) dans le jour (5) sont prévus.

3. Auxiliaire de montage selon la revendication 1 ou 2, **caractérisé en ce qu'**on a prévu une gorge (6) pour une meilleure manipulation au-dessus du jour (5) .

4. Auxiliaire de montage selon l'une quelconque des revendications 1 à 3, **caractérisé en ce qu'**on a prévu une bifurcation (10) qui est adaptée à la conformation d'un autre élément (7) ou endroit sur lequel l'auxiliaire de montage (1) s'oriente lors du positionnement.

5. Auxiliaire de montage selon l'une quelconque des revendications, **caractérisé en ce qu'**à l'intérieur du jour (5), on a prévu une surface d'appui (5.1) pour une partie de l'élément à coller (2).
